# EUROPÄISCHE PATENTANMELDUNG

(11) **EP 1 941 960 A1**
(43) Veröffentlichungstag der Anmeldung: **09.07.2008**
(21) Anmeldenummer: 07023801.9
(22) Anmeldetag: 08.12.2007
(51) Int. Cl.: B23B 51/06

(54) **Bohrwerkzeug insb. Spiralbohrer**

(30) Priorität: 11.12.2006 DE 102006058217
(71) Anmelder: Fa. Kästner Präzisionswerkzeuge Gmbh, 98587 Steinbach-Hallenberg (DE)
(72) Erfinder: Kästner, Jürgen, 98587 Bermbach (DE)

(57) **Zusammenfassung**

Die Erfindung bezieht sich auf Bohrwerkzeuge in der Art von Spiralbohrern mit vom Schaftteil nach dem Arbeitsteil des Werkzeugkörpers hin geführtem KSM-Kanalsystem.

Es wurde von der Aufgabenstellung ausgegangen, eine wirkungsvollere Versorgung des Werkzeugkopfteiles mit Kühlschmiermittel zu garantieren, um die Arbeits- und Wirkbedingungen im Bereich der Werkzeugschneiden zu verbessern. Außerdem sollen im Bereich des Werkzeugkopfteiles die Reibungsverhältnisse sowie die Werkzeugführung, einschließlich tribologischer Effekte, optimiert werden.

Diese Aufgabe wird im Wesentlichen durch die Kombination folgender Merkmale gelöst:
Das System für das KSM wird durch zwei zentral angeordnete, den Werkzeugkörper in den Bohrerstegen längs durchgreifende, jeweils in den Schneidenfreiflächen des Arbeitsteiles ausmündenden KSM-Bohrungen sowie durch ebenso zwei oder mehrere in jeweils kammerartigen Ausnehmungen an der Umfangsfläche der Bohrerstege einmündenden KSM-Bohrungen gebildet, wobei die kammerartigen, umfangsflächig angeordneten Ausnehmungen an den Bohrerstegen in Umfangsrichtung durch jeweils zwei Führungsfasen gebildet und durch diese begrenzt sind.

## Beschreibung

Die Erfindung bezieht sich auf Bohrwerkzeuge in der Art von Spiralbohrern mit vom Schaftteil nach dem Arbeitsteil des Werkzeugkörpers hin geführten KSM-Kanalsystem

Bohrwerkzeuge, aber auch Senk- und Reibwerkzeuge mit innerer Kühlschmiermittelzufuhr sind prinzipiell bekannt, siehe Firmendruckschrift Bohrmeister Gühring, Ausg. 41/95 der Gottlieb Gühring AG Albstadt. Die an bekannten Bohrwerkzeugen vorgesehenen Schmierkanäle gehen von einem zentralen Schmierkanal aus, der sich im Bereich des Werkzeugkopfteiles verzweigt und zur Spannut hin schräg geöffnet ist. Diese Ausführung führt zu ansprechenden Strömungsverhältnissen innerhalb der Schmierkanalkonstruktion und bietet bei der Ausbildung und Kühlung der Späne annehmbare Spanungstechnologien. Außerdem werden damit Materialverklebungen oder Aufbauschneiden im Schneidenbereich verringert, der Spänebruch gefördert und der Spänetransport verbessert. Es ist bekannt, dass die geometrische Anordnung und größenmäßige Auslegung der Schmierstoffkanäle neben der Werkzeuggeometrie zur Gestaltung des Schneidenbereiches zu verbesserten Zerspanungsleistungen und erhöhten Oberflächenqualitäten führt, was besonders auch unter den Bedingungen der Hochgeschwindigkeitsbearbeitung und der Minimalmengenschmierung beobachtet werden konnte. Vor allem konnte durch diese Maßnahmen die Versorgung des Schneidenbereiches am Werkzeug die Spanbildung und bessere Spanförderung vorteilhaft beeinflusst sowie Späneverklemmungen vermieden werden. Insgesamt konnten durch diese Maßnahmen die Kühl-, Schmierungs- und Reibungsverhältnisse verbessert und die Entstehung von Aufbauschneiden herabgesetzt werden.

Sowohl bei der Nass-, aber auch der Trockenbearbeitung (MMS) kommt zudem der Optimierung der Schneidengeometrie eine besondere Bedeutung zu, weil beispielsweise durch eine stärkere Verjüngung, breitere Nuten und schmalere Fasen die Reibungsverhältnisse positiv zu beeinflussen sind, wobei die wichtigsten Optionen auf die Reduzierung der Reibung zwischen Span und Werkzeug einerseits sowie zwischen Werkzeug- und Werkstückoberfläche gerichtet sein müssen.

Ein wichtiger Schritt zur Überwindung und Reduzierung der genannten Unzulänglichkeiten beim Zerspanungsprozess wird deshalb auch darin gesehen, die Spanbildung durch Kühlung der Späne und den Spantransport durch Verringerung von Materialverklebungen und Verschleiß zu verbessern.

Mit zunehmender Bohrtiefe erhöht sich bekanntlich die Reibung, die an den Kontaktstellen zwischen Werkzeug und Bohrungswandung und zwischen den Spänen und den Spannuten entsteht. Bei der Trockenbearbeitung und MM-Schmierung tritt diese Schwierigkeit aufgrund der unzureichend bereitgestellten Schmiermittel in vermehrtem Maße auf. Die Späne stauen sich, was in mehrfacher Hinsicht nachteilige Auswirkungen zeigt und mit der Überlastung des Bohrwerkzeuges schließlich bis zum Werkzeugbruch führen kann.

Diesen Erscheinungen entgegen zu wirken, die Reibungsverhältnisse, die Spanbildung und den Spänetransport zu verbessern, ist mit verschiedenen Lösungsansätzen begegnet worden, unter anderem auch damit, durch entsprechende Oberflächenbeschichtungen, der Nuten- und Schneidengeometrie und auch der Arbeits- und Vorschubsgeschwindigkeiten einen Produktivitätsgewinn bei längerer Werkzeugstandzeit zu erreichen. Dennoch muss hier und da bei den verschiedenartigen Anwendungsfällen bezüglich der zu bearbeitenden Werkstückstoffe, wie beispielsweise Stahl, Gusseisen, oder Alulegierungen, der Effekt bezüglich der Verbesserung der Reibungsverhältnisse bei gleichzeitiger Gewährleistung der Oberflächenqualität noch als unbefriedigend empfunden werden.

Aus diesen Umständen resultiert die Aufgabe der vorliegenden Erfindung, die im Wesentlichen darauf abzielt, durch eine effektvollere Gestaltung der Werkzeuggeometrie im Bereich des Werkzeugkopfteiles bzw. der Werkzeugschneide eine gute Spanbildung und Spanwegführung zu erzielen und daneben durch eine wirkungsvollere Versorgung des Werkzeugkopfteiles mit Kühlschmiermittel die Arbeits- und Wirkbedingungen im Bereich der Werkzeugschneiden zu verbessern. Insbesondere sollen im Bereich des Werkzeugkopfteiles die Reibungsverhältnisse und durch konstruktive Gestaltungen die Werkzeugführung, einschließlich tribologischer Effekte, Vervollkommnungen im Arbeits- und Leistungsverhaltens des Werkzeuges erreicht werden.

Diese Aufgabe wird gemäß der vorliegenden Erfindung unter Anwendung der im ersten Patentanspruch charakterisierten technischen Mittel gelöst. Weitere Lösungselemente der hier in Vorschlag gebrachten Werkzeuggestaltung sind in den Unteransprüchen dargelegt.

Die dort dargelegte neuartige Anordnung und Ausführung der Elemente zur Verbesserung des Arbeitsverhaltens der Werkzeuge, besonders hinsichtlich der Arbeitsgenauigkeit und der Spänewegförderung, treten dort besonders augenfällig und überzeugend in Erscheinung, wo es darum geht, relativ tiefe Bohrungen bei ansprechenden Zerspanungsleistungen und anspruchsvollen Oberflächen der bearbeiteten Bohrung zu erzeugen.
Ein besonderer Vorzug der Erfindung besteht auch darin, dass das hier in Vorschlag gebrachte Lösungskonzept nicht nur für den klassischen Spiralbohrer sinnvoll und vorteilhaft anwendbar ist, sondern sich ebenso zweckmäßig und vorteilhaft bei Senk- oder Reibwerkzeugen mit mehreren Werkzeugfasen darstellt.
Die erfindungsgemäße Werkzeuggestaltung ist am Beispiel eines Spiralbohrers in der zugehörigen Zeichnung dargestellt.

Es zeigen
- Fig. 1: eine schaubildliche Vorderansicht auf den Arbeitsteil des Spiralbohrers mit den aus dem Bohrerkörper austretenden KSM-Bohrungen
- Fig. 2: die Ansicht im Schnittverlauf D-D in Fig. 1 mit den beiden, den Bohrerkörper axial durchdringenden, an den beiden Freiflächen der Bohrerschneide heraustretenden KSM-Bohrungen und den beiden radial nach außen geführten, in jeweils eine kammerartige Ausnehmung am Rücken der Bohrerstege ausmündende KSM-Bohrungen
- Fig. 3: eine schaubildliche Ansicht auf das rückwärtige Ende des Bohrereinspannschaftes mit den beiden dort in das Bohrerinnere hinein geführten KSM-Bohrungen
- Fig. 4: eine schaubildliche Darstellung des Arbeitsteiles des Spiralbohrers mit den dort angedeuteten, aus den Bohrerstegen sowohl axial ausmündenden, als auch radial heraus geführten KSM-Bohrungen
- Fig. 5: eine Ansicht auf den Arbeitsteil eines Mehrfasensenk- und/oder Reibwerkzeuges mit erfindungsgemäß an den Bohrerstegen ausgeführten Führungsfasen und den analog angeordneten KSM-Bohrungen

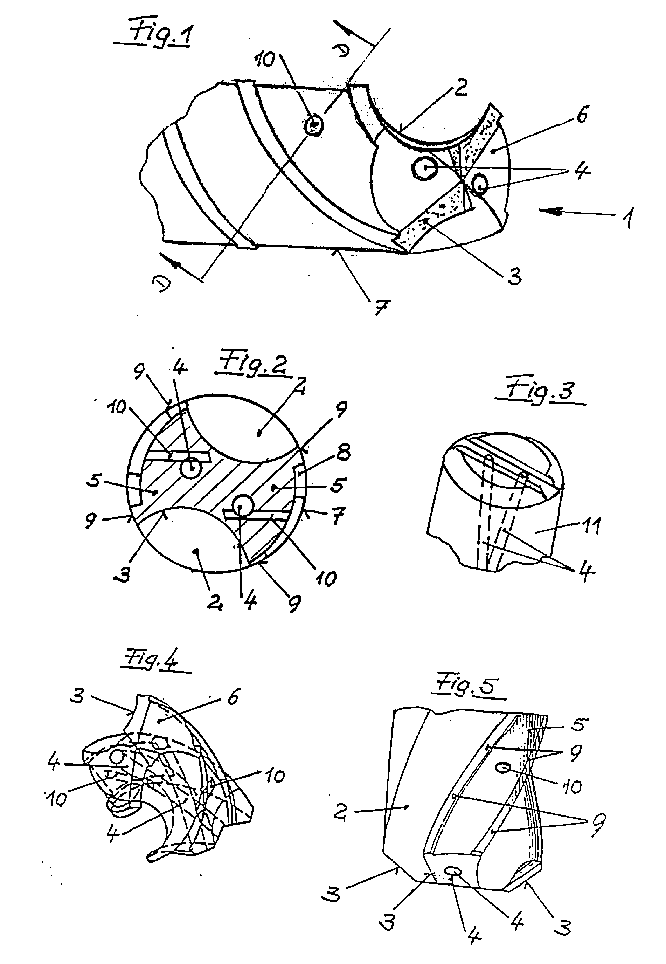

Der in den Ausführungsbeispielen dargestellte zweischneidige Spiralbohrer 1 ist mit als Drallnuten ausgebildeten Spannuten 2 entsprechend der Anzahl der vorhandenen Bohrerschneiden 3 versehen.
Der Erfindungsvorschlag kann demgemäß auch an Werkzeugen mit mehr als zwei Hauptschneiden und dementsprechend mehr als zwei Spannuten, wie das z. B. bei Senk- und/oder Reibwerkzeugen der Fall ist, Anwendung finden (Fig. 5).
Die Spannuten 2 sind in den Bohrerkörper in einer Form und Größe eingearbeitet, die den bei diesem Bohrertyp üblicherweise vorzusehenden Maßstäben entsprechen. Sie können hierbei beispielsweise auch mit nach dem Einspannschaft hin sich vergrößertem Steigungswinkel ausgeführt sein, was für die Spanungsbedingungen und den Spänetransport bestimmter Werkstoffarten von Vorteil ist. Außerdem kann der Arbeitsteil des Bohrers, also bis zum Einspannschaft hin, leicht konisch, d. h. sich verjüngend gestaltet sein, wie das bei Tieflochbohrern aus verschiedenen zerspanungstechnischen Gründen zweckmäßig und vorteilhaft ist.
Der hier dargestellte zweischneidige Spiralbohrer 1 wird nicht, wie das der Stand der Technik kennt, nur von einem, sondern von zwei oder bei mehrschneidigen Senk- oder Reibwerkzeugen von mehreren, in Richtung der Werkzeugachse nochmals verzweigten KSM-Bohrungen 4 durchragt, die entlang und im Innern der Bohrerstege 5 liegend, jeweils in die Freiflächen 6 der Bohrerschneiden 3 ausmünden.
Im vorderen Teil des Werkzeugkörpers, dem eigentlichen Arbeitsteil, sind etwa auf eine Länge von 2 bis 5 x D von der Werkzeugspitze aus gemessen, an den Umfangsflächen 7 der Bohrerstege 5 je eine kammerartige Ausnehmung 8 mit einer radialen Tiefe der Vorzugsweisen Größe von etwa 5/100 mm bis 2 mm eingearbeitet, die von seitlichen, in Drehrichtung des Werkzeuges hintereinander liegenden Führungsfasen 9 begrenzt sind (Fig. 2 und Fig. 5).
In diese kammerartigen Ausnehmungen 8 münden jeweils KSM-Bohrungen 10, die, wie Fig. 2 und Fig. 4 zeigen, mit den in den Bohrerstegen 5 angeordneten KSM-Bohrungen 4 strömungsmäßig in Wirkverbindung stehen und die Ausnehmungen 8 mit KS-Mitteln auffüllen. Da diese unter Strömungsdruck stehen, wird der Arbeitsteil des Werkzeuges so hinreichend und effektvoll mit Kühlschmiermitteln versorgt, dass sich nicht nur durch die KSM-Bohrungen 4 im Bereich der Werkzeugschneiden eine gute Schmierwirkung einstellt, sondern auch im Bereich der Umfangsflächen ein stabiler umlaufender Schmierfilm erzeugt wird, der neben der Kühlung und Schmierung der Werkzeugschneide und der Späne noch zudem eine dynamische Stabilisierung zu präziserem, stabilerem Rundlauf, zumal bei schnell laufenden Werkzeugen, mit sich bringt. Erhöht werden diese hier erreichten Effekte schließlich noch durch die werkzeugtechnisch vorgesehenen, hintereinander angeordneten Führungsfasen 9 an den Bohrerstegen 5.
Insgesamt werden durch das mit der Erfindung in Vorschlag gebrachte KSM-Kanalsystem sowie durch die konstruktive Beschaffenheit des Werkzeuges im Bereich seines Arbeitsteils wesentlich verbesserte Bedingungen für die Erhöhung der Leistungsfähigkeit dieser Werkzeuggattung erreicht.

### Bezugszeichenliste

- 1: Spiralbohrer
- 2: Spannuten
- 3: Bohrerschneiden
- 4: KSM-Bohrungen
- 5: Bohrerstege
- 6: Freiflächen
- 7: Umfangsflächen
- 8: Ausnehmungen
- 9: Führungsfasen
- 10: KSM-Bohrungen
- 11: Werkzeugschaftteil

## Patentansprüche

1. Bohrwerkzeug, insbesondere Spiralbohrer, mit vom Schaftteil nach dem Arbeitsteil des Werkzeugkörpers hin geführten KSM-Kalalsystem, **gekennzeichnet durch** die Kombination folgender Merkmale:
a) Das System für das KSM wird **durch** zwei zentral angeordnete, jedoch voneinander getrennte und den Werkzeugkörper in den Bohrerstegen (5) längs durchgreifende, jeweils in den Schneidenfreiflächen (6) des Arbeitsteiles ausmündenden KSM-Bohrungen (4) sowie
b) **durch** ebenso zwei oder mehrere, mit den zentralen KSM-Bohrungen (4) in Wirkverbindung stehende, in jeweils eine kammerartige Ausnehmung (8) an der Umfangsfläche der Bohrerstege (5) einmündende KSM-Bohrungen (10) gebildet ist, wobei
c) die kammerartigen, umfangsflächig angeordneten Ausnehmungen (8) an den Bohrerstegen (5) in Umfangsrichtung **durch** jeweils zwei Führungsfasen (9) gebildet und **durch** diese begrenzt sind, während sie in axialer Richtung in die Umfangsfläche des dort ohne Führungsfasen ausgebildeten Arbeitsteiles des Werkzeugkörpers auslaufen und wobei
d) die kammerartigen Ausnehmungen (8) in ihrer axialen Länge etwa dem 2 - 5fachen Bohrerdurchmesser D, von der Bohrerspitze aus gemessen, entsprechen.

2. Bohrwerkzeug nach Anspruch 1, **dadurch gekennzeichnet, dass** die kammerartigen Ausnehmungen (8), je nach Bohrerdurchmesser D, eine relative Tiefe von der Größe etwa von 5/100 mm bis 2 mm aufweisen.

3. Bohrwerkzeug nach Anspruch 1, **dadurch gekennzeichnet, dass** die in die kammerartigen Ausnehmungen (8) der Bohrerstege (5) hingeführten KSM-Bohrungen (10) in Bezug auf die Mittenachse des Werkzeuges gesehen, schräg, d. h. im spitzen Winkel zur Bohrerspitze hin angeordnet sind.
